(19) **Europäisches Patentamt European Patent Office Office européen des brevets**

(11) **EP 4 746 556 A1**

(12) **EUROPEAN PATENT APPLICATION**
published in accordance with Art. 153(4) EPC

(43) Date of publication:
20.05.2026 Bulletin 2026/21

(21) Application number: 24851034.9

(22) Date of filing: 07.08.2024

(51) International Patent Classification (IPC):
*H04W 72/0457* (2023.01) *H04L 5/00* (2006.01)

(52) Cooperative Patent Classification (CPC):
H04L 5/00; H04W 24/02; H04W 24/10;
H04W 72/0457

(86) International application number:
PCT/CN2024/110356

(87) International publication number:
WO 2025/031389 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.08.2023 CN 202311010308

(71) Applicant: Huawei Technologies Co., Ltd.
Shenzhen, Guangdong 518129 (CN)

(72) Inventors:
• LI, Jun
  Shenzhen, Guangdong 518129 (CN)
• HUA, Meng
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **COMMUNICATION METHOD AND APPARATUS**

(57) This application provides a communication method. The method includes: A base station sends CSI report configuration information to a terminal device. The CSI report configuration information corresponds to M CSI resources, the CSI report configuration information includes N pieces of sub-configuration information, and each piece of sub-configuration information corresponds to the M CSI resources. Each piece of sub-configuration information indicates at least one sequence identifier and at least one port sequence, each port sequence includes at least one antenna port, and each sequence identifier indicates one port sequence. M is an integer greater than or equal to 1, and N is an integer greater than 1. The base station sends, on the M CSI resources, a reference signal to the terminal device. In this application, a plurality of pieces of sub-configuration information are added to the CSI report configuration information, so that the terminal device can measure CSI resources with a plurality of configurations to obtain CSI, thereby improving CSI reporting flexibility.

200

FIG. 2

**Description**

This application claims priority to Chinese Patent Application No. 202311010308.X, filed with the China National Intellectual Property Administration on August 10, 2023, and entitled "COMMUNICATION METHOD AND APPARATUS", which is incorporated herein by reference in its entirety.

**TECHNICAL FIELD**

This application relates to the communication field, and in particular, to a communication method and apparatus.

**BACKGROUND**

With the introduction of network energy saving (network energy saving, NES), there are different configurations when a network device schedules a physical downlink shared channel (physical downlink shared channel, PDSCH). In different configurations, the network device enables different antennas, to reduce power consumption of the network device. Before scheduling the PDSCH, the network device needs to learn of channel state information (channel state information, CSI), and the CSI is usually obtained by a terminal device through channel measurement on a CSI resource. Currently, the terminal device measures and reports CSI of a CSI resource with only a single configuration, which cannot meet a network energy saving requirement.

Therefore, how to measure CSI with a plurality of configurations to improve CSI reporting flexibility is a problem worth considering.

**SUMMARY**

This application provides a communication method. A plurality of pieces of sub-configuration information are added to CSI report configuration information, so that a terminal device can measure CSI resources with a plurality of configurations and obtain CSI, to improve CSI reporting flexibility.

According to a first aspect, a communication method is provided. The method may be performed by a base station, or may be performed by a chip or a circuit used for the base station. This is not limited in this application. For ease of description, an example in which the method is performed by the base station is used below for description.

The method includes: The base station sends channel state information CSI report configuration information to a terminal device. The CSI report configuration information corresponds to M CSI resources, the CSI report configuration information includes N pieces of sub-configuration information, and each piece of sub-configuration information corresponds to the M CSI resources. Each piece of sub-configuration information indicates at least one sequence identifier and at least one port sequence, each port sequence includes at least one antenna port, and each sequence identifier indicates one port sequence. M is an integer greater than or equal to 1, and N is an integer greater than 1. The base station sends, on the M CSI resources, a reference signal to the terminal device.

In embodiments of this application, the channel state information (channel state information, CSI) report configuration information includes the N pieces of sub-configuration information, and each piece of sub-configuration information includes port indication information. The port indication information indicates the at least one sequence identifier and the at least one port sequence. The terminal device may receive, on a CSI resource, the reference signal based on sub-configuration information, and measure a corresponding antenna port based on a sequence identifier and a port sequence that are indicated by the port indication information in the sub-configuration information. Then, the terminal device may report CSI in different sub-configurations to the base station, to improve CSI reporting flexibility.

With reference to the first aspect, in some implementations of the first aspect, the antenna port included in the port sequence is an antenna port enabled by the base station when the base station sends a physical downlink shared channel to the terminal device.

It should be noted that, in this embodiment of this application, the antenna port in the sub-configuration information and the antenna port enabled by the base station when the base station sends the physical downlink shared channel to the terminal device correspond to a same physical antenna. However, because numbering rules of antenna ports may be different, the antenna port in the sub-configuration information may have a different number from the antenna port enabled by the base station when the base station sends the physical downlink shared channel to the terminal device.

For example, for a same physical antenna, a number of a CSI-RS antenna port in the sub-configuration information may be 3000+i, where $0 \le i \le 31$, and a number of an antenna port for the physical downlink shared channel may be 1000+j, where $0 \le j \le 11$. Both i and j are integers.

In this embodiment of this application, the sub-configuration information may be determined by the base station based on network energy saving configuration information. Specifically, the network energy saving configuration information indicates enabled and disabled CSI-RS antenna ports. For example, the network energy saving configuration information includes a bitmap (bitmap), and bits in the bitmap are in one-to-one correspondence with the CSI-RS antenna ports. In the bitmap, 1 represents enabling (enable), and 0 represents disabling (disable). Enabling may be understood as performing CSI measurement by using the CSI-RS antenna port, and then transmitting the PDSCH by using a physical antenna corresponding to the CSI-RS antenna port. It is assumed that there are CSI-RS ports, and a bitmap is 10001000, indicating that antenna ports corresponding to CSI-RS antenna port numbers 0 (i=0) and 4 (i=4) are enabled, and other antenna ports are disabled. The base station determines the port indication information based on the network energy saving configuration information. All antenna ports in the port sequence in the port indication information are enabled antenna ports in the network energy saving configuration information.

In this embodiment of this application, channel measurement may be performed on antenna ports in different configurations, so that the base station can use an energy saving configuration when sending the physical downlink shared channel, to implement energy saving of the base station.

With reference to the first aspect, in some implementations of the first aspect, the sub-configuration information includes the at least one sequence identifier and the at least one port sequence.

In this embodiment of this application, a port sequence that needs to be measured may be explicitly indicated, and the terminal device does not need to perform further determining, to reduce a compute amount of the terminal device, and improve computational efficiency.

With reference to the first aspect, in some implementations of the first aspect, the sub-configuration information includes at least one antenna port.

In this embodiment of this application, a port sequence that needs to be measured may be implicitly indicated. Specifically, if there is no sequence identifier in the sub-configuration information, the terminal device sorts the at least one antenna port in a default order, and then determines a value range of the sequence identifier based on a quantity of antenna ports in the sub-configuration information. When the sequence identifier is n, first n antenna ports in the antenna ports sorted in the default order are used as a port sequence corresponding to the sequence identifier n. It is assumed that the quantity of antenna ports in the sub-configuration information is m, the antenna port is sorted in the default order as: $p_0$, $p_1$, $p_2$,..., $p_{m-1}$, and the sequence identifiers are 1 to m. In this case, when the sequence identifier is 1, a corresponding port sequence is $\{p_0\}$; when the sequence identifier is 2, a corresponding port sequence is $\{p_0, p_1\}$; when the sequence identifier is 3, a corresponding port sequence is $\{p_0, p_1, p_2\}$; and so on. When the sequence identifier is m, a corresponding port sequence is $\{p_0, p_1, p_2,..., p_{m-1}\}$. The default order may be specified in a protocol, or may be preset in the base station and the terminal device. This is not limited in this application.

In this embodiment of this application, the sequence identifier and the port sequence are implicitly indicated, to reduce signaling overheads.

With reference to the first aspect, in some implementations of the first aspect, the sequence identifier includes a rank, and a value of the rank represents a quantity of antenna ports in a port sequence indicated by the rank.

With reference to the first aspect, in some implementations of the first aspect, the N pieces of sub-configuration information include first sub-configuration information and second sub-configuration information, and a port sequence indicated by the first sub-configuration information and a port sequence indicated by the second sub-configuration information include at least one same antenna port. The method further includes: The base station sends first information to the terminal device. The first information indicates the terminal device to measure, in a first time unit, a reference signal on the port sequence indicated by the first sub-configuration information, and measure, in a second time unit, a reference signal on the port sequence indicated by the second sub-configuration information. The first time unit and the second time unit are different time units.

If antenna ports in different sub-configurations overlap, there are a plurality of precoding matrices for an overlapped antenna port, and the base station cannot determine a precoding matrix of the overlapped antenna port. This affects selection of an antenna port for sending a physical downlink shared channel by the base station. In this embodiment of this application, the terminal device is indicated to measure the overlapped antenna port in different time units, to distinguish the sub-configurations. This means that resources corresponding to the sub-configurations with the overlapped antenna port are different, thereby implementing normal operation of the base station.

With reference to the first aspect, in some implementations of the first aspect, the time unit includes a slot.

According to a second aspect, a communication method is provided. The method may be performed by a terminal device, or may be performed by a chip or a circuit used for the terminal device. This is not limited in this application. For ease of description, an example in which the method is performed by the terminal device is used below for description.

The method includes: The terminal device receives channel state information CSI report configuration information from a base station. The CSI report configuration information corresponds to M CSI resources, the CSI report configuration information includes N pieces of sub-configuration information, and each piece of sub-configuration information corresponds to the M CSI resources. Each piece of sub-configuration information indicates at least one sequence identifier and at least one port sequence, each port sequence includes at least one antenna port, and each sequence identifier indicates one port sequence. M is an integer greater than or equal to 1, and N is an integer greater than 1. The terminal device receives, on the M CSI resources, a reference signal.

With reference to the second aspect, in some implementations of the second aspect, the sub-configuration information includes the at least one sequence identifier and the at least one port sequence.

With reference to the second aspect, in some implementations of the second aspect, the sub-configuration information includes at least one antenna port.

With reference to the second aspect, in some implementations of the second aspect, the sequence identifier includes a rank, and a value of the rank represents a quantity of antenna ports in a port sequence indicated by the rank.

With reference to the second aspect, in some implementations of the second aspect, the N pieces of sub-configuration information include first sub-configuration information and second sub-configuration information, and a port sequence indicated by the first sub-configuration information and a port sequence indicated by the second sub-configuration information include at least one same antenna port.

The method further includes: The terminal device measures, in a first time unit, a reference signal on the port sequence indicated by the first sub-configuration information, and measures, in a second time unit, a reference signal on the port sequence indicated by the second sub-configuration information. The first time unit and the second time unit are different time units.

With reference to the second aspect, in some implementations of the second aspect, the time unit includes a slot.

For beneficial effects of the second aspect, refer to the descriptions of the first aspect. Details are not described herein again.

According to a third aspect, a communication method is provided. The method may be performed by a base station, or may be performed by a chip or a circuit used for the base station. This is not limited in this application. For ease of description, an example in which the method is performed by the base station is used below for description.

The method includes: The base station sends channel state information CSI report configuration information to a terminal device. The CSI report configuration information corresponds to M CSI resources, the CSI report configuration information includes M pieces of port indication information and N pieces of sub-configuration information, the pieces of port indication information are in one-to-one correspondence with the CSI resources, and each piece of sub-configuration information corresponds to the M CSI resources. The port indication information indicates at least one sequence identifier and at least one port sequence, each port sequence includes at least one first antenna port used for channel measurement, each sequence identifier indicates one port sequence, and the sub-configuration information indicates at least one second antenna port. M is an integer greater than or equal to 1, and N is an integer greater than 1. The base station sends, on the M CSI resources, a reference signal to the terminal device by using at least one first port sequence. The first port sequence belongs to the port sequence indicated by the port indication information, and an antenna port in the first port sequence is the second antenna port.

It should be noted that, in this embodiment of this application, that the base station sends, on the M CSI resources, the reference signal to the terminal device by using the at least one first port sequence means that antenna ports used by the base station to send, on the M CSI resources, the reference signal include but are not limited to all antenna ports in the at least one first port sequence. For example, the base station may send, on the M CSI resources, the reference signal by using all the antenna ports (that is, P antenna ports).

In this embodiment of this application, the base station provides the port indication information and the sub-configuration information for the terminal device, so that the terminal device can determine, from the port indication information based on different sub-configuration requirements, a port sequence that needs to be measured, to report CSI in different sub-configurations to the base station at a granularity of the port sequence, thereby improving CSI reporting flexibility.

With reference to the third aspect, in some implementations of the third aspect, the second antenna port is an antenna port enabled by the base station when the base station sends a physical downlink shared channel to the terminal device.

In this embodiment of this application, the base station has an energy saving configuration, and the sub-configuration information includes energy saving configuration information of the base station. The second antenna port indicated by the sub-configuration information is the antenna port enabled by the base station when the base station sends the physical downlink shared channel to the terminal device. In this embodiment of this application, channel measurement may be performed on the antenna port based on different energy saving configurations, so that the base station can use the energy saving configuration when sending the physical downlink shared channel, to implement energy saving of the base station.

With reference to the third aspect, in some implementations of the third aspect, the port indication information includes the at least one sequence identifier and the at least one port sequence.

In this embodiment of this application, a port sequence that needs to be measured may be explicitly indicated, and the terminal device does not need to perform further determining, to reduce a compute amount of the terminal device, and improve computational efficiency.

With reference to the third aspect, in some implementations of the third aspect, the port indication information includes at least one antenna port.

In this embodiment of this application, the sequence identifier and the port sequence are implicitly indicated, to reduce signaling overheads.

With reference to the third aspect, in some implementations of the third aspect, the sequence identifier includes a rank, and a value of the rank represents a quantity of antenna ports in a port sequence indicated by the rank.

With reference to the third aspect, in some implementations of the third aspect, T pieces of network energy saving configuration information include first sub-configuration information and second sub-configuration information, and at least one second antenna port indicated by the first sub-configuration information and at least one second antenna port indicated by the second sub-configuration information include at least one same antenna port.

The method further includes: The base station sends first information to the terminal device. The first information indicates the terminal device to measure, in a first time unit, a reference signal of the at least one second antenna port indicated by the first sub-configuration information, and measures, in a second time unit, a reference signal of the at least one second antenna port indicated by the second sub-configuration information. The first time unit and the second time unit are not a same time unit.

In this embodiment of this application, the terminal device is indicated to measure an overlapped antenna port in different time units, to distinguish the sub-configurations. This means that resources corresponding to sub-configurations with the overlapped antenna port are different, thereby implementing normal operation of the base station.

With reference to the third aspect, in some implementations of the third aspect, the time unit includes a slot.

According to a fourth aspect, a communication method is provided. The method may be performed by a terminal device, or may be performed by a chip or a circuit used for the terminal device. This is not limited in this application. For ease of description, an example in which the method is performed by the terminal device is used below for description.

The method includes: The terminal device receives channel state information CSI report configuration information from a base station. The CSI report configuration information corresponds to M CSI resources, the CSI report configuration information includes M pieces of port indication information and N pieces of sub-configuration information, the pieces of port indication information are in one-to-one correspondence with the CSI resources, and each piece of sub-configuration information corresponds to the M CSI resources. The port indication information indicates at least one sequence identifier and at least one port sequence, each port sequence includes at least one first antenna port used for channel measurement, each sequence identifier indicates one port sequence, and the sub-configuration information indicates at least one second antenna port. M is an integer greater than or equal to 1, and N is an integer greater than 1.

The terminal device measures, on the M CSI resources, a reference signal on at least one first port sequence. The first port sequence belongs to the port sequence indicated by the port indication information, and an antenna port in the first port sequence is the second antenna port.

It should be noted that, in this embodiment of this application, that the terminal device measures, on the M CSI resources, the reference signal on the at least one first port sequence means that the reference signal measured on the M CSI resources by the terminal device includes but is not limited to reference signals on all antenna ports in the at least one first port sequence.

With reference to the fourth aspect, in some implementations of the fourth aspect, the second antenna port is an antenna port enabled by the base station when the base station sends a physical downlink shared channel.

With reference to the fourth aspect, in some implementations of the fourth aspect, the port indication information includes the at least one sequence identifier and the at least one port sequence.

With reference to the fourth aspect, in some implementations of the fourth aspect, the port indication information includes the at least one port sequence and a first correspondence, and the first correspondence is a correspondence between a sequence identifier and a port sequence.

With reference to the fourth aspect, in some implementations of the fourth aspect, the sequence identifier includes a rank, and a value of the rank represents a quantity of antenna ports in a port sequence indicated by the rank.

With reference to the fourth aspect, in some implementations of the fourth aspect, T pieces of network energy saving configuration information include first sub-configuration information and second sub-configuration information, and at least one second antenna port indicated by the first sub-configuration information and at least one second antenna port indicated by the second sub-configuration information include at least one same antenna port.

The method further includes: The terminal device measures, in a first time unit, a reference signal received on the at least one second antenna port indicated by the first sub-configuration information, and measures, in a second time unit, a reference signal received on the at least one second antenna port indicated by the second sub-configuration information. The first time unit and the second time unit are not a same time unit.

With reference to the fourth aspect, in some implementations of the fourth aspect, the time unit includes a slot.

For beneficial effects of the fourth aspect, refer to the descriptions of the third aspect. Details are not described herein again.

According to a fifth aspect, a communication apparatus is provided, and includes: a processing unit, configured to determine CSI report configuration information; and a transceiver unit, configured to send the CSI report configuration information to a terminal device. The CSI report configuration information corresponds to M CSI resources, the CSI report configuration information includes N pieces of sub-configuration information, and each piece of sub-configuration information corresponds to the M CSI resources. Each piece of sub-configuration information indicates at least one sequence identifier and at least one port sequence, each port sequence includes at least one antenna port, and each sequence identifier indicates one port sequence. M is an integer greater than or equal to 1, and N is an integer greater than 1. The transceiver unit is further configured to send, on the M CSI resource, a reference signal to the terminal device.

The transceiver unit may perform receiving and sending processing in the first aspect, and the processing unit may perform processing other than receiving and sending in the first aspect.

According to a sixth aspect, a communication apparatus is provided, and includes a transceiver unit, configured to receive CSI report configuration information from a base station, where the CSI report configuration information corresponds to M CSI resources, the CSI report configuration information includes N pieces of sub-configuration information, each piece of sub-configuration information corresponds to the M CSI resources, each piece of sub-configuration information indicates at least one sequence identifier and at least one port sequence, each port sequence includes at least one antenna port, each sequence identifier indicates one port sequence, M is an integer greater than or equal to 1, and N is an integer greater than 1; and the transceiver unit is further configured to receive, on the M CSI resources, a reference signal; and a processing unit, configured to measure the reference signal and determine CSI.

The transceiver unit may perform receiving and sending processing in the second aspect, and the processing unit may perform processing other than receiving and sending in the second aspect.

According to a seventh aspect, a communication apparatus is provided, and includes: a processing unit, configured to determine channel state information CSI report configuration information; and a transceiver unit, configured to send the CSI report configuration information to a terminal device. The CSI report configuration information corresponds to M CSI resources, the CSI report configuration information includes M pieces of port indication information and N pieces of sub-configuration information, the pieces of port indication information are in one-to-one correspondence with the CSI resources, and each piece of sub-configuration information corresponds to the M CSI resources. The port indication information indicates at least one sequence identifier and at least one port sequence, each port sequence includes at least one first antenna port, each sequence identifier indicates one port sequence, and the first antenna port is used for channel measurement. Network energy saving configuration information indicates at least one second antenna port, where the second antenna port is an antenna port enabled by the base station when the base station sends a physical downlink shared channel to the terminal device. M is an integer greater than or equal to 1, and N is an integer greater than 1. The transceiver unit is further configured to send, on the M CSI resources, a reference signal to the terminal device by using at least one first port sequence. The first port sequence belongs to the port sequence indicated by the port indication information, and an antenna port in the first port sequence is the second antenna port.

The transceiver unit may perform receiving and sending in the third aspect, and the processing unit may perform processing other than receiving and sending in the third aspect.

According to an eighth aspect, a communication apparatus is provided, and includes a transceiver unit, configured to receive channel state information CSI report configuration information from a base station. The CSI report configuration information corresponds to M CSI resources, the CSI report configuration information includes M pieces of port indication information and N pieces of sub-configuration information, the pieces of port indication information are in one-to-one correspondence with the CSI resources, and each piece of sub-configuration information corresponds to the M CSI resources. The port indication information indicates at least one sequence identifier and at least one port sequence, each port sequence includes at least one first antenna port, and each sequence identifier indicates one port sequence. The first antenna port is used for channel measurement. Network energy saving configuration information indicates at least one second antenna port, where the second antenna port is an antenna port enabled by the base station when the base station sends a physical downlink shared channel to the terminal device. M is an integer greater than or equal to 1, and N is an integer greater than 1. The processing unit is configured to measure, on the M CSI resources, a reference signal on the at least one first port sequence. The first port sequence belongs to the port sequence indicated by the port indication information, and an antenna port in the first port sequence is the second antenna port.

The transceiver unit may perform receiving and sending in the fourth aspect, and the processing unit may perform processing other than receiving and sending in the fourth aspect.

According to a ninth aspect, a communication apparatus is provided, including a transceiver, a processor, and a memory. The processor is configured to control the transceiver to receive and send signals. The memory is configured to store a computer program. The processor is configured to invoke the computer program from the memory and run the computer program, to enable the communication apparatus to perform the method according to any one of the first aspect to the fourth aspect and any possible implementation of the first aspect to the fourth aspect.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to a tenth aspect, a communication system is provided, including a base station and a terminal device. The base station is configured to perform the method in any possible implementation of the first aspect or the third aspect, and the terminal device is configured to perform the method in any possible implementation of the second aspect or the fourth aspect.

According to an eleventh aspect, a computer-readable storage medium is provided. The computer-readable storage medium stores a computer program or code. When the computer program or code is run on a computer, the computer is enabled to perform the method according to any one of the first aspect to the fourth aspect and any possible implementation of the first aspect to the fourth aspect.

According to a twelfth aspect, a chip is provided, including at least one processor. The at least one processor is coupled to a memory. The memory is configured to store a computer program. The processor is configured to invoke the computer program from the memory and run the computer program, to enable an apparatus in which the chip system is installed to perform the method according to any one of the first aspect to the fourth aspect and any possible implementation of the first aspect to the fourth aspect.

The chip may include an input circuit or interface for sending information or data, and an output circuit or interface for receiving information or data.

According to a thirteenth aspect, a computer program product is provided. The computer program product includes computer program code. When the computer program code is run on an apparatus, the apparatus is enabled to perform the method according to any one of the first aspect to the fourth aspect and any possible implementation of the first aspect to the fourth aspect.

## BRIEF DESCRIPTION OF DRAWINGS

FIG. 1 is a diagram of an architecture of a communication system to which an embodiment of this application is applied;
FIG. 2 is a flowchart of a communication method according to an embodiment of this application;
FIG. 3 is a flowchart of another communication method according to an embodiment of this application;
FIG. 4 is a diagram of reporting CSI in a time-division manner according to an embodiment of this application;
FIG. 5 is a block diagram of a communication apparatus 1000 according to an embodiment of this application;
FIG. 6 is a block diagram of a communication apparatus 2000 according to an embodiment of this application; and
FIG. 7 is a block diagram of a chip system 3000 according to an embodiment of this application.

## DESCRIPTION OF EMBODIMENTS

The following describes technical solutions of this application with reference to accompanying drawings.

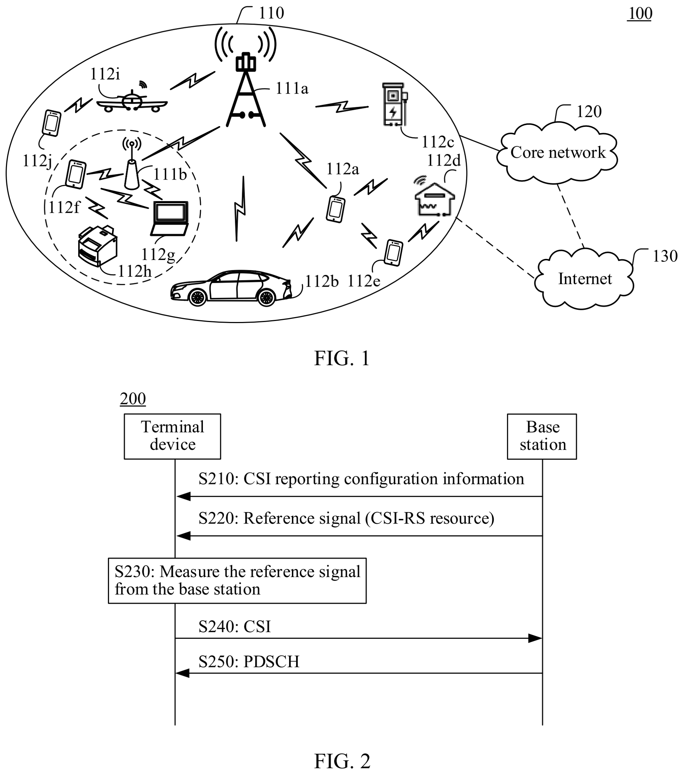

FIG. 1 is a diagram of an architecture of a communication system to which an embodiment of this application is applied. As shown in FIG. 1, the communication system includes a radio access network 110 and a core network 120. Optionally, the communication system 100 may further include an internet 130. The radio access network 110 may include at least one radio access network device (for example, 111a and 111b in the figure), and may further include at least one terminal device (for example, 112a to 112j in the figure). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not shown in the figure.

The radio access network device is an access device used by the terminal device to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 111a in the figure), a micro base station or an indoor station (for example, 111b in the figure), a relay node, a donor node, or the like. A specific technology and a specific device form that are used by the radio access network device are not limited in embodiments of this application. For ease of description, the following provides descriptions by using an example in which the radio access network device is a base station.

The terminal device is a device having a wireless transceiver function, and may send a signal to the base station, or receive a signal from the base station. The terminal device may also be referred to as a terminal, user equipment (user equipment, UE), a mobile station, a mobile terminal, or the like. The terminal device may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The base station and the terminal device may be fixed or movable. The base station and the terminal device may be deployed on land, where the deployment includes indoor or outdoor, or hand-held or vehicle-mounted; may be deployed on water; or may be deployed on an airplane, a balloon, or an artificial satellite. Application scenarios of the base station and the terminal device are not limited in embodiments of this application.

Roles of the base station and the terminal device may be relative. For example, a helicopter or uncrewed aerial vehicle 112i in the figure may be configured as a mobile base station. For those terminal devices 112j accessing the radio access network 110 via 112i, the terminal device 112i is a base station. However, for the base station 111a, 112i is a terminal device, that is, communication between 111a and 112i is performed based on a radio air interface protocol. It is clear that communication between 111a and 112i may alternatively be performed based on an interface protocol between base stations. In this case, for 111a, 112i is also a base station. Therefore, both the base station and the terminal device may be collectively referred to as a communication apparatus, 111a and 111b in the figure may be referred to as communication apparatuses having a base station function, and 112a to 112j in the figure may be referred to as communication apparatuses having a terminal function.

Communication between the base station and the terminal device, between the base stations, and between the terminal devices may be performed through a licensed spectrum, an unlicensed spectrum, or both the licensed spectrum and the unlicensed spectrum, which may be performed through a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the base station function. The control subsystem including the base station function herein may be a control center in the foregoing application scenarios, such as a smart grid, industrial control, smart transportation, and a smart city. The terminal device function may alternatively be performed by a module (for example, a chip or a modem) in the terminal device, or may be performed by an apparatus having the terminal function.

For ease of understanding embodiments of this application, the following first briefly describes terms in embodiments of this application.

1. Channel state information report (CSI report)

The channel state information report may also be referred to as CSI report for short. In a wireless communication system, CSI is information reported by a receiving end (for example, a terminal device) to a transmitting end (for example, a network device) and used to describe a channel attribute of a communication link. The CSI may include, for example, but is not limited to, a precoding matrix indicator (precoding matrix indicator, PMI), a rank indication (rank indication, RI), a channel quality indicator (channel quality indicator, CQI), a channel state information reference signal (channel state information reference signal, CSI-RS) resource indicator (CSI-RS resource indicator, CRI), and a layer indicator (layer indicator, LI). It should be understood that the foregoing listed specific content of the CSI is merely an example for description, and shall not constitute any limitation on this application. The CSI may include one or more of the foregoing listed content, or may include other information that is different from the foregoing listed content and that is used to represent the CSI. This is not limited in this application.

An example in which the terminal device reports the CSI to the network device is used. The terminal device may report one or more pieces of CSI in one time unit (for example, a slot (slot)), and each piece of CSI may correspond to one CSI report configuration condition. The CSI report configuration condition may be determined, for example, by using higher layer signaling (for example, an information element (information element, IE) CSI report configuration (CSI-report config) in a radio resource control (radio resource control, RRC) message). The CSI report configuration may indicate a time-domain behavior of CSI report, a bandwidth, a format corresponding to a report quantity (report quantity), and the like. The time-domain behavior includes, for example, periodic (periodic), semi-persistent (semi-persistent), and aperiodic (aperiodic) time-domain behaviors. The terminal device may generate one piece of CSI based on one CSI report configuration.

The base station may configure the terminal device to report the PMI. For example, the base station configures, in the CSI report, that the terminal device needs to report the CRI, the RI, the PMI, and the CQI, that is, configures CRI-RI-PMI-CQI in the CSI report. The base station sends an non-precoded CSI-RS, and the terminal device measures the CSI-RS, to obtain the RI, the PMI, and the CQI, and then reports to the base station. Because a CSI-RS resource set associated with the CSI report may include a plurality of CSI-RSs, a function of the CRI is to indicate a specific CSI-RS based on which the terminal device obtains, through measurement, the CSI that is reported. After the base station receives the CSI reported by the terminal device, when subsequently scheduling a PDSCH, the base station selects, based on the CRI, the RI, the PMI, and the CQI that are reported by the terminal device, an appropriate PMI and CQI for scheduling.

Alternatively, the base station may configure the terminal device not to report the PMI, for example, configure cri-RI-CQI in the CSI report. The base station sends a precoded CSI-RS. To be specific, the base station may obtain an uplink channel $H_{UL}$ by using an uplink SRS, and then obtain a downlink channel $H_{DL}$ based on reciprocity between the uplink and downlink channels, to obtain a downlink precoding matrix W. Then, the base station applies the downlink precoding matrix to a CSI-RS, and then the base station sends the CSI-RS. The terminal device may obtain the RI and the CQI by measuring the CSI-RS, and then report the CRI, the RI, and the CQI to the base station. When scheduling a PDSCH, the base station selects, based on the CRI, the RI, and the CQI that are reported by the terminal device, an appropriate PMI and CQI for scheduling.

When configuring the cri-RI-CQI, the base station may further indicate, by using RRC signaling non-PMI-PortIndication, a port used for measurement. non-PMI-PortIndication specifically indicates a port sequence. For example, the sequence is as follows:

$$p_0^{(1)}, p_0^{(2)}, p_1^{(2)}, p_0^{(3)}, p_1^{(3)}, p_2^{(3)}, \cdots, p_0^{(R)}, p_1^{(R)}, \cdots, p_{R-1}^{(R)} \quad R \in \{1, 2, \cdots, P\}$$

$p_0^{(v)}, p_1^{(v)}, \cdots, p_{v-1}^{(v)}$ are CSI-RS ports associated with a rank (rank) v. For example, a CSI-RS port associated with a rank $v = 1$ is $p_0^{(1)} = 0$; CSI-RS ports $p_0^{(2)}$ $and$ $p_1^{(2)}$ associated with a rank $v = 2$ are 0 and 1; and CSI-RS ports $p_0^{(3)}, p_1^{(3)}$, $and$ $p_2^{(3)}$ associated with a rank $v = 3$ are 0, 3, and 4. The terminal device can select only one rank value from the ranks for reporting. When UE obtains, through measurement, the rank $v = 2$, the UE obtains a CQI by using the CSI-RS ports $p_0^{(2)}$ $and$ $p_1^{(2)}$. P is a quantity of CSI-RS antenna ports, and $P = \{1, 2, 4, 8\}$.

non-PMI-PortIndication is configured for each resource, that is, port sequences configured for different CSI-RS resources may be different. If configuration is not performed, the CSI-RS ports $p_0^{(v)}, p_1^{(v)}, \cdots, p_{v-1}^{(v)}$ associated with the rank v are {0, 1, $\cdots$, v - 1} by default, and $v = \{1, 2, \cdots, P\}$.

2. Network energy saving (network energy saving, NES)

An antenna port (antenna port) is a logical antenna port, and is not an actual physical antenna. On a same antenna port, a channel on one symbol may be inferred based on a channel on another symbol. An antenna port number of a CSI-RS may be 3000+i, where $0 \leq i \leq 31$. For the CSI-RS, the antenna port number of the CSI-RS may alternatively be simply represented by i. An antenna port number of a demodulation reference signal (Demodulation reference signal, DMRS) of a PDSCH may be 1000+j, where $0 \leq j \leq 11$, and both i and j are integers. For the PDSCH, the antenna port number of the PDSCH may alternatively be simply represented by j.

There are two types of energy-saving technologies related to a spatial domain (spatial domain, SD) in network energy saving NES. One type of technology is to completely disable the antenna port to save energy. This mode may be referred to as type 1 SD adaptation. For example, if an antenna port 0 performs sending via X physical antennas, type 1 SD may be understood as that if the antenna port 0 is to be disabled, all the X physical antennas corresponding to the antenna port 0 are powered down, and correspondingly, the antenna port 0 is also disabled, where X is a positive integer. In the type 1 SD adaptation, a disabled antenna port may be an antenna port of the PDSCH.

The other type of technology is to power down a part of physical antennas corresponding to the antenna port, to save energy. This mode may be referred to as type 2 SD adaptation. For example, if half of physical antennas corresponding to an antenna port 0 are powered down and the other half of the physical antennas are not powered down, a signal on the antenna port 0 can still be sent, but only half of the antennas are used for sending.

It should be noted that the foregoing terms or technologies all belong to the conventional technology, and are not limited.

For ease of understanding of embodiments of this application, the following descriptions are provided.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, a character "/" usually represents an "or" relationship between associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in this application, "first", "second", and various numerical numbers indicate differentiation for ease of description, and are not used to limit the scope of embodiments of this application, for example, are intended to distinguish between different messages but not to describe a specific order or sequence. It should be understood that objects described in such a way are interchangeable in an appropriate circumstance, so that a solution other than embodiments of this application can be described.

Fourth, in this application, terms "include", "have", and any variants thereof are intended to cover non-exclusive inclusion. For example, a process, a method, a system, a product, or a device that includes a series of steps or units is not necessarily limited to those expressly listed steps or units, but may include another step or unit not expressly listed or inherent to the process, the method, the product, or the device.

Fifth, in this application, "indicate" may include a direct indication and an indirect indication. When a piece of indication information indicates A, the indication information may directly indicate A or indirectly indicate A, but it does not mean that the indication information definitely carries A.

Sixth, a "protocol" in this application may be a standard protocol in the communication field, for example, may include a 5G protocol, a new radio (new radio, NR) protocol, and a related protocol applied to a future communication system. This is not limited in this application. "Predefinition" may include definition in advance, for example, definition in a protocol. "Pre-configuration" may be implemented by pre-storing corresponding code or a corresponding table in a device, or may be implemented in another manner that may indicate related information. A specific implementation thereof is not limited in this application.

Seventh, in this application, "communication" may also be described as "data transmission", "information transmission", "data processing", or the like. "Transmission" includes "sending" and "receiving".

The following describes, in detail with reference to the accompanying drawings, the communication method provided in embodiments of this application. Embodiments provided in this application are applicable to any communication scenario in which a transmitting-end device communicates with a receiving-end device, for example, are applied to the communication system shown in FIG. 1.

FIG. 2 is a flowchart of a communication method 200 according to an embodiment of this application.

S210: A base station sends CSI report configuration information to a terminal device. The CSI report configuration information corresponds to M CSI resources, the CSI report configuration information includes N pieces of sub-configuration information, and each piece of sub-configuration information corresponds to the M CSI resources. Each piece of sub-configuration information indicates at least one sequence identifier and at least one port sequence, each port sequence includes at least one antenna port, and each sequence identifier indicates one port sequence. M is an integer greater than or equal to 1, and N is an integer greater than 1.

The base station may send the CSI report configuration information to the terminal device by using radio resource control (radio resource control, RRC) signaling.

In this application, the sequence identifier may include a rank (rank), and a quantity of antenna ports included in a port sequence corresponding to the rank is equal to a value of the rank.

In embodiments of this application, the sub-configuration information may explicitly or implicitly indicate the at least one sequence identifier and the at least one port sequence.

In a possible implementation, the sub-configuration information explicitly indicates the at least one sequence identifier and the at least one port sequence, and the sub-configuration information includes the at least one sequence identifier and the at least one port sequence. A port sequence that needs to be measured is explicitly indicated, and the terminal device does not need to perform further determining, which saves compute resources of the terminal device, and improves computational efficiency of the terminal device.

In a possible implementation, the sub-configuration information implicitly indicates the at least one sequence identifier and the at least one port sequence, and the sub-configuration information includes at least one antenna port. Specifically, it is assumed that a quantity of antenna ports in the sub-configuration information is m, and the antenna port is sorted in a default order as: $p_0$, $p_1$, $p_2$,..., $p_{m-1}$. In this case, sequence identifiers are 1 to m, and a sequence identifier v corresponds to first v antenna ports. To be specific, when the sequence identifier is 1, a corresponding port sequence is $\{p_0\}$; when the sequence identifier is 2, a corresponding port sequence is $\{p_0, p_1\}$; when the sequence identifier is 3, a corresponding port sequence is $\{p_0, p_1, p_2\}$; and so on. When the sequence identifier is m, a corresponding port sequence is $\{p_0, p_1, p_2,..., p_{m-1}\}$. The default order, for example, an ascending order or a descending order, may be specified in a protocol, or may be preset in the base station and the terminal device. This is not limited in this application.

Particularly, enabled antenna ports indicated by network energy saving configuration information may be sorted in the default order, to obtain the sorted $p_0$, $p_1$, $p_2$,..., $p_{m-1}$, where m is a quantity of enabled antenna ports. The enabled antenna port indicated by the network energy saving configuration information is a CSI-RS antenna port used for CSI measurement, or may be understood as an antenna port enabled when the base station sends a PDSCH, because the antenna ports correspond to a same physical antenna. For example, the network energy saving configuration information includes a bitmap (bitmap), where 1 in the bitmap represents enabling, and 0 in the bitmap represents disabling. It is assumed that there are CSI-RS ports, the bitmap is 10001000, and CSI-RS antenna ports corresponding to antenna port numbers 0 and 4 are enabled. In this case, m=2. After the antenna ports are sorted in an ascending order of the antenna port numbers, $p_0$=0 and $p_1$=4. When the sequence identifier is 1, a corresponding port sequence is $\{0\}$; or when the sequence identifier is 2, a corresponding port sequence is $\{0, 4\}$. The sequence identifier may be the rank. When the rank is 1, the terminal device performs CSI measurement by using a port 0, to obtain a CQI. When the rank is 2, the terminal device performs CSI measurement by using ports 0 and 4, to obtain a CQI.

For example, a possible case of the CSI report (CSI Report) configuration information is as follows. The CSI report configuration information indicates the terminal device not to report a PMI (that is, cri-RI-CQI). It is set that the CSI report configuration information corresponds to two CSI resources (CSI-RS resource 0 and CSI-RS resource 1) and corresponds to two sub-configurations (Sub-configuration A and Sub-configuration B). It is set that there are eight antenna ports on each of the two CSI-RS resources, and the CSI report configuration information indicates the at least one sequence identifier and the at least one port sequence by using the port indication information (PortIndexFor8Ranks).

CSI-Report#1 (cri-RI-CQI)

CSI-RS resource set includes two resources: CSI-RS resources 0 and 1

CSI-RS resource 0 (8 ports)
CSI-RS resource 1 (8 ports)

Sub-configuration A

Ports 0-3 (turn on), Ports 4-7 (turn off)
PortIndexFor8Ranks, which is configured for CSI-RS resource 0, for example, is configured as

$$p_0^{(1)}, p_0^{(2)}, p_1^{(2)}, p_0^{(3)}, p_1^{(3)}, p_2^{(3)} = \{0,0,3,0,1,3\}$$

PortIndexFor8Ranks, which is configured for CSI-RS resource 1, for example, is configured as

$$p_0^{(1)}, p_0^{(2)}, p_1^{(2)}, p_0^{(3)}, p_1^{(3)}, p_2^{(3)}, p_0^{(4)}, p_1^{(4)}, p_2^{(4)}, p_3^{(4)} = \{1,1,3,0,1,2,0,1,2,3\}$$

Sub-configuration B

Ports 0-3 (turn off), Ports 4-7 (turn on)
PortIndexFor8Ranks, which is configured in B for CSI-RS resource 0, for example, is configured as

$$p_0^{(1)}, p_0^{(2)}, p_1^{(2)} = \{4,4,6\}$$

PortIndexFor8Ranks, which is configured in B for CSI-RS resource 1, for example, is configured as

$$p_0^{(1)}, p_0^{(2)}, p_1^{(2)}, p_0^{(3)}, p_1^{(3)}, p_2^{(3)} = \{5,4,5,5,6,7\}$$

In the foregoing example, the port indication information (PortIndexFor8Ranks) in the CSI report configuration information is determined by the base station based on the network energy saving configuration information. It may also be understood as that the network energy saving configuration information is determined based on the port indication information, or the network energy saving configuration information and the port indication information are determined together. This is not limited herein. Specifically, the network energy saving configuration information indicates an antenna port enabled by the base station when the base station sends a physical downlink shared channel to the terminal device. For example, the network energy saving configuration information includes a bitmap (bitmap), where 1 in the bitmap represents enabling, and 0 in the bitmap represents disabling. It is assumed that the base station has eight ports, and the bitmap is 10001000. The bitmap indicates that when the base station sends the physical downlink shared channel to the terminal device, CSI-RS antenna ports corresponding to antenna port numbers 0 and 4 are enabled, and the other antenna ports are disabled. The base station determines the port indication information based on the network energy saving configuration information. All antenna ports in the port sequence in the port indication information are enabled antenna ports in the network energy saving configuration information.

For example, the sub-configuration information may include the port indication information. The port indication information (PortIndexFor8Ranks) indicates the at least one sequence identifier and the at least one port sequence. Specifically, one piece of sub-configuration information may include M pieces of port indication information, and the M pieces of port indication information are in one-to-one correspondence with M CSI-RS resources.

In a possible implementation, the sub-configuration information may further include the network energy saving configuration information, and the network energy saving configuration information indicates at least one antenna port enabled when the base station sends the PDSCH to the terminal device.

In the foregoing example, the CSI report configuration information includes the network energy saving configuration information. However, because the network energy saving configuration information is applied to the base station, and the port indication information in this embodiment is determined based on the network energy saving configuration information, the CSI report configuration information may not include the network energy saving configuration information, to reduce signaling overheads.

S220: The base station sends, on the M CSI resources, a reference signal to the terminal device, that is, sends, on the M CSI resources, a channel state information reference signal (channel state information reference signal, CSI-RS) used for CSI measurement to the terminal device.

It should be noted that a CSI-RS resource may also be referred to as a channel measurement pilot.

The sent CSI-RS includes three types of CSI-RSs: periodic, semi-persistent, and aperiodic CSI-RSs.

The semi-persistent CSI-RS may be activated by using a MAC CE (Media Access Control control element), and then the CSI-RS is sent periodically. The aperiodic CSI-RS may be activated by using DCI, and then the CSI-RS is sent.

S230: The terminal device measures the reference signal from the base station based on the CSI report configuration information, to determine channel state information CSI.

Specifically, the terminal device measures a corresponding antenna port based on the port sequence indicated in the CSI report configuration information, to obtain the corresponding CSI.

In this embodiment of this application, the CSI includes a CRI, an RI, and a CQI. Based on each sub-configuration, UE may obtain corresponding CSI through measurement. Alternatively, the UE may perform measurement based only on a sub-configuration for which reporting needs to be performed and that is indicated by the base station, to obtain corresponding CSI. The indication information includes the DCI or the MAC CE.

S240: The terminal device reports the CSI to the base station.

There are three types of CSI report: periodic report, semi-persistent report, and aperiodic report.

If the CSI is periodically reported, the terminal device performs reporting through a physical uplink control channel PUCCH.

If the CSI is semi-persistently reported through the PUCCH, the terminal device further needs to be activated by using a MAC-CE message to report the CSI.

If the CSI is semi-persistently reported through a PUSCH, the terminal device further needs to be activated by using the DCI to report the CSI.

If the CSI is aperiodically reported, the terminal device further needs to be activated by using the DCI to report the CSI.

It should be noted that, in embodiments of this application, activating CSI reporting may also be referred to as triggering CSI reporting. This name is not specifically limited in embodiments of this application, provided that meanings expressed are the same.

It should be noted that, in a protocol, the three types of CSI-RS resources and the three types of CSI reporting may not be randomly combined. Combinations of the types of CSI-RS resource and the types of the CSI reporting are shown in Table 1.

Table 1

|  | Periodic CSI reporting | Semi-persistent CSI reporting | Aperiodic CSI reporting |
|---|---|---|---|
| Periodic CSI-RS | Can be combined | Can be combined | Can be combined |
| Semi-persistent CSI-RS | Cannot be combined | Can be combined | Can be combined |
| Aperiodic CSI-RS | Cannot be combined | Cannot be combined | Can be combined |

S250: The base station sends the PDSCH to the terminal device based on the CSI from the terminal device.

In embodiments of this application, the CSI report configuration information includes the N pieces of sub-configuration information, and each piece of sub-configuration information includes the port indication information. The port indication information indicates the at least one sequence identifier and the at least one port sequence. The terminal device may receive, on a CSI resource in a configuration, a reference signal based on sub-configuration information, and measure a corresponding antenna port based on a sequence identifier and a port sequence that are indicated by port indication information in the sub-configuration information. Then, the terminal device may report, at a granularity of the port sequence, CSI in different sub-configurations to the base station, to improve CSI reporting flexibility. In addition, in this embodiment of this application, the antenna port in the sub-configuration information and the antenna port enabled by the base station when the base station sends the physical downlink shared channel to the terminal device correspond to a same physical antenna. However, because numbering rules of antenna ports may be different, the antenna port in the sub-configuration information may have a different number from the antenna port enabled by the base station when the base station sends the physical downlink shared channel to the terminal device.

In the foregoing example, the port sequence in the CSI report configuration information received by the terminal device is determined after the base station considers the network energy saving configuration information, and the terminal device does not need to perform additional determining. However, signaling overheads in this case are high.

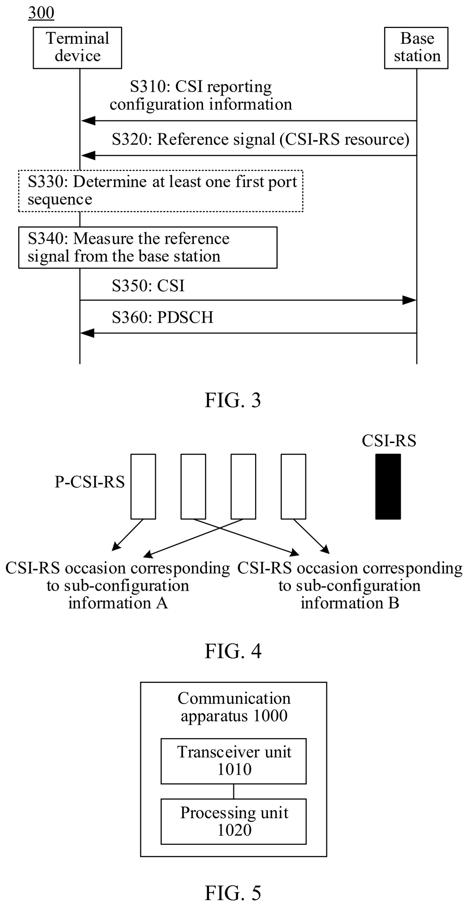

FIG. 3 is a flowchart of another communication method 300 according to an embodiment of this application.

S310: A base station sends CSI configuration information to a terminal device. The CSI report configuration information corresponds to M CSI resources, the CSI report configuration information includes M pieces of port indication information and N pieces of sub-configuration information, the pieces of port indication information are in one-to-one correspondence with the CSI resources, and each piece of sub-configuration information corresponds to the M CSI resources. The port indication information indicates at least one sequence identifier and at least one port sequence, each port sequence includes at least one first antenna port used for channel measurement, each sequence identifier indicates one port sequence, and the sub-configuration information indicates at least one second antenna port. M is an integer greater than or equal to 1, and N is an integer greater than 1.

The base station may send the CSI report configuration information to the terminal device by using RRC signaling.

In this application, the sequence identifier may include a rank (rank), and a quantity of antenna ports included in a port sequence corresponding to the rank is equal to a value of the rank.

In embodiments of this application, the port indication information may explicitly or implicitly indicate the at least one sequence identifier and the at least one port sequence.

In a possible implementation, the port indication information explicitly indicates the at least one sequence identifier and the at least one port sequence, and the port indication information includes the at least one sequence identifier and the at least one port sequence.

In a possible implementation, the port indication information implicitly indicates the at least one sequence identifier and the at least one port sequence, and the port indication information includes at least one first antenna port. Specifically, it is assumed that a quantity of first antenna ports in the port indication information is m, and the antenna port is sorted in a default order as: $p_0$, $p_1$, $p_2$,..., $p_{m-1}$. In this case, sequence identifiers are 1 to m, and a sequence identifier v corresponds to first v antenna ports. When the sequence identifier is 1, a corresponding port sequence is $\{p_0\}$; when the sequence identifier is 2, a corresponding port sequence is $\{p_0, p_1\}$; and so on. When the sequence identifier is m, a corresponding port sequence is $\{p_0, p_1, p_2,..., p_{m-1}\}$. The default order, for example, an ascending order or a descending order, may be specified in a protocol, or may be preset in the base station and the terminal device. This is not limited in this application. For example, a quantity of CSI-RS antenna ports is 4. That is, P=4=m. The CSI-RS antenna ports are sorted in ascending order. In this case, $p_0$, $p_1$, $p_2$, and $p_3$ are 0, 1, 2, and 3 respectively. CSI-RS ports $p_0^{(v)}, p_1^{(v)}, \cdots, p_{v-1}^{(v)}$

associated with the sequence identifier $v$ are {0,1, $\cdots$, $v$ - 1} by default, where $v$ = {1,2, $\cdots$ ,4}. In this case, when the sequence identifier is 1, a corresponding port sequence is {0}; when the sequence identifier is 2, a corresponding port sequence is {0, 1}; when the sequence identifier is 3, a corresponding port sequence is {0, 1, 2}; or when the sequence identifier is 4, a corresponding port sequence is {0, 1, 2, 3}.

In a possible implementation, the sub-configuration information includes energy saving configuration information, and the second antenna port indicated in the sub-configuration information is an antenna port enabled by the base station when the base station sends a PDSCH to the terminal device.

For example, a possible case of the CSI report (CSI Report) configuration information is as follows. The CSI report configuration information indicates the terminal device not to report a PMI (that is, cri-RI-CQI). It is set that the CSI report configuration information corresponds to two CSI resources (CSI-RS resource 0 and CSI-RS resource 1) and corresponds to two pieces of sub-configuration (Sub-configuration A and Sub-configuration B) information. It is set that there are eight antenna ports on a CSI-RS resource, and the CSI report configuration information indicates the at least one sequence identifier and the at least one port sequence by using the port indication information (PortIndexFor8Ranks).

<div align="center">

CSI-Report#1 (cri-RI-CQI)

CSI-RS resource set includes two resources: CSI-RS resources 0 and 1

CSI-RS resource 0 (8 ports)

PortIndexFor8Ranks

Rank v=4, indicating that four ports $p_0^{(4)}, p_1^{(4)}, p_2^{(4)}, and\ p_3^{(4)}$ are {4, 5, 6, 7}

Rank v=3, indicating that three ports $p_0^{(3)}, p_1^{(3)}, and\ p_2^{(3)}$ are {4, 5, 6}

Rank v=2, indicating that two ports $p_0^{(2)}$ and $p_1^{(2)}$ are {1, 2}

Rank v=1, indicating that one port $p_0^{(1)}$ is {1}

CSI-RS resource 1 (8 ports)

PortIndexFor8Ranks

Rank v=3, indicating that three ports $p_0^{(3)}, p_1^{(3)}, and\ p_2^{(3)}$ are {4, 5, 7}

Rank v=2, indicating that two ports $p_0^{(2)}\ and\ p_1^{(2)}$ are {0, 1}.

Rank v=1, indicating that one port $p_0^{(1)}$ is {0}.

Sub-configuration A

Ports 0–3 (turn on), Ports 4–7 (turn off)

Sub-configuration B

Ports 0–3 (turn off), Ports 4–7 (turn on)

</div>

S320: The base station sends, on the M CSI resources, a reference signal or a CSI-RS resource to the terminal device. For details, refer to the descriptions of S220. Details are not described herein again.

Optionally, in S330, the terminal device determines at least one first port sequence, where the first port sequence belongs to the port sequence indicated by the port indication information, and an antenna port in the first port sequence is a second antenna port.

In this embodiment of this application, the base station performs processing without using the port indication information. In this way, antenna ports in a part of port sequences in the port indication information do not belong to the enabled antenna port in the sub-configuration information. Consequently, the port indication information conflicts with the sub-configuration information. Subsequently, the base station cannot use the sub-configuration information to perform port configuration. To resolve this problem, the terminal device determines the at least one first port sequence based on the port indication information and the sub-configuration information, where the first port sequence belong to the port sequence indicated by the port indication information, and the antenna port in the first port sequence is the second antenna port. CSI-Report#1 (cri-RI-CQI) in S310 is used as an example. For CSI-RS resource 0, based on the sub-configuration information Sub-configuration A, the first port sequence includes: Rank v=1, indicating that one port $p_0^{(1)}$ is {1}; and Rank v=2, indicating that two ports $p_0^{(2)}$ and $p_1^{(2)}$ are {1, 2}. For CSI-RS resource 0, based on the sub-configuration information Sub-configuration B, the first port sequence includes: Rank v=3, indicating that three ports $p_0^{(3)}, p_1^{(3)}$, and $p_2^{(3)}$ are {4, 5, 6}; and Rank v=4, indicating that four ports $p_0^{(4)}, p_1^{(4)}, p_2^{(4)}$, and $p_3^{(4)}$ are {4, 5, 6, 7}. For CSI-RS resource 1, based on the sub-configuration information Sub-configuration A, the first port sequence includes: Rank v=1, indicating that one port $p_0^{(1)}$ is {0}; and Rank v=2, indicating that two ports $p_0^{(2)}$ and $p_1^{(2)}$ are {1, 2}. For CSI-RS resource 1, based on the sub-configuration information Sub-configuration B, the first port sequence includes: Rank v=3, indicating that three ports $p_0^{(3)}, p_1^{(3)}$, and $p_2^{(3)}$ are {4, 5, 7}. For Sub-configuration A, if the CRI indicates resource 0 or 1, a rank reported by UE may be 1 or 2, and 1 bit is required for indication, that is, RI is of 1 bit. For Sub-configuration B, if the CRI indicates resource 0, a rank reported by the UE may be 3 or 4, and 1 bit is required for indication, that is, the RI is of 1 bit; or if the CRI indicates resource 1, a rank reported by the UE can only be 3, and no bit is required for indication, that is, RI is of 0 bits. To enable the base station to learn of a bit quantity of the RI regardless of content of the CRI, a larger bit quantity, that is, 1 bit, needs to be selected for the bit quantity of the RI. In other words, for a specific sub-configuration, the bit quantity of the RI is a largest value in bit quantities of RIs corresponding to all CSI-RS resources.

S340: The terminal device measures the reference signal from the base station. Specifically, the terminal device measures the reference signal received by the antenna port in the at least one first port sequence, to obtain CSI. For details, refer to the descriptions of S230. Details are not described herein again.

S350: The terminal device reports the CSI to the base station. For details, refer to the descriptions of S240. Details are not described herein again.

S360: The base station sends the PDSCH to the terminal device based on the CSI from the terminal device.

In this embodiment of this application, the base station provides the port indication information and the sub-configuration information for the terminal device, so that the terminal device can determine, from the port indication information based on different sub-configuration requirements, a port sequence that needs to be measured, to report CSI in different sub-configurations to the base station at a granularity of the port sequence, thereby improving CSI reporting flexibility. In addition, in this embodiment of this application, the base station has an energy saving configuration, and the sub-configuration information includes energy saving configuration information. The second antenna port indicated by the sub-configuration information is the antenna port enabled by the base station when the base station sends the physical downlink shared channel to the terminal device. In this embodiment of this application, channel measurement may be performed on the antenna port based on different energy saving configurations, so that the base station can use the energy saving configuration when sending the physical downlink shared channel, to implement energy saving of the base station.

In the embodiments in FIG. 2 and FIG. 3, for one CSI resource configuration, there are a plurality of pieces of sub-configuration information, and each piece of sub-configuration information corresponds to one piece of network energy saving configuration information, that is, corresponds to one energy saving configuration of the base station. Antenna ports indicated by network energy saving configuration information corresponding to different pieces of sub-configuration information may overlap.

For example, the sub-configuration information Sub-configuration A indicates that antenna ports 0 to 7 are enabled; the sub-configuration information Sub-configuration B indicates that antenna ports 0 to 3 are enabled and antenna ports 4 to 7 are disabled; and the sub-configuration information Sub-configuration C indicates that antenna ports 4 to 7 are enabled and antenna ports 0 to 3 are disabled. The enabled antenna ports in Sub-configuration A overlap the enabled antenna ports in Sub-configuration B, and the enabled antenna ports in Sub-configuration A overlap the enabled antenna ports in Sub-configuration C. When the base station sends the CSI-RS through precoding, an overlapped antenna port has a plurality of precoding matrices, and the base station cannot perform selection. As a result, the CSI-RS cannot be normally sent. In a possible solution, for semi-persistent reporting or aperiodic CSI reporting activated by using DCI, CSI of Sub-configuration A and CSI of Sub-configuration B are not allowed to be both reported, and CSI of Sub-configuration A and CSI of Sub-configuration C are not allowed to be both reported. To be specific, when the terminal device receives one piece of DCI, and a CSI request field in the DCI triggers reporting of these sub-configurations, the terminal device considers the DCI as a false alarm. To be specific, when the terminal device reports the CSI of the sub-configurations, enabled antenna ports in the reported sub-configurations are not expected to overlap. For example, if the terminal device is to report CSI of two sub-configurations, enabled antenna ports in one sub-configuration are not expected to overlap enabled antenna ports in the other sub-configuration. If CSI of a plurality of sub-configurations is to be reported, the sub-configurations cannot overlap.

The foregoing solution may be performed as follows: After detecting an overlapping situation, the base station indicates, to the terminal device, sub-configuration information corresponding to CSI that is not allowed to report by the terminal device. For example, the base station sends second information to the terminal device, to indicate the terminal device not to report/measure antenna ports in first sub-configuration information and second sub-configuration information, where the antenna ports corresponding to the first sub-configuration information and the second sub-configuration information overlap.

Alternatively, it may be specified in the protocol or preconfigured by the terminal device that after detecting an overlapping situation, the terminal device actively does not report CSI corresponding to sub-configuration information with the overlapping situation.

In a possible solution, if CSI reporting of Sub-configuration A and Sub-configuration B is to be allowed, time-division measurement is performed, and then the CSI is reported. FIG. 4 is a diagram of reporting CSI in a time-division manner according to an embodiment of this application. As shown in FIG. 4, for a periodic CSI-RS, some CSI-RS occasions (occasion) are associated with Sub-configuration A, and other CSI-RS occasions are associated with Sub-configuration B. In this way, a base station may send a CSI-RS in a time-division manner through different precoding. A specific association relationship between a CSI-RS occasion and a sub-configuration may be indicated by the base station. For example, an occasion on an even-number slot (slot) is associated with Sub-configuration A, and an occasion on an odd-number slot is associated with Sub-configuration B. Alternatively, the association relationship may be predefined. This is equivalent to that one sub-configuration corresponds to only one CSI-RS resource.

The foregoing solution may be performed as follows: After detecting an overlapping situation, the base station indicates the terminal device to measure, in different time units, CSI corresponding to an overlapping port. For example, the base station sends first information to the terminal device, to indicate the terminal device to measure, in a first time unit, a reference signal on a port sequence indicated by first sub-configuration information, and measure, in a second time unit, a reference signal on a port sequence indicated by second sub-configuration information. The first time unit and the second time unit are different time units, and antenna ports corresponding to the first sub-configuration information and the second sub-configuration information overlap.

Alternatively, it may be specified in the protocol or preconfigured by the terminal device that after detecting the overlapping situation, the terminal device reports, in different time units, CSI corresponding to an overlapped port.

Particularly, the sub-configuration information in the embodiment in FIG. 2 may implicitly include the network energy saving configuration information, that is, the base station may not directly send the network energy saving configuration information to the terminal device. In this case, when detecting that antenna ports indicated by the network energy saving configuration information overlap, the base station may send indication information to the terminal device. Alternatively, when detecting that same antenna ports exist in different sub-configuration information corresponding to a same CSI resource, the terminal device determines that overlapping occurs in network energy saving configuration information corresponding to the different sub-configuration information.

In embodiments of this application, it is considered that antenna ports indicated by the sub-configuration information overlap, that is, enabled ports in the energy saving configuration of the base station overlap, so that the base station can send the CSI-RS through different precoding, and the terminal device can perform measurement to obtain the CSI and then report the CSI to the base station. In this way, the base station can save energy when scheduling a PDSCH.

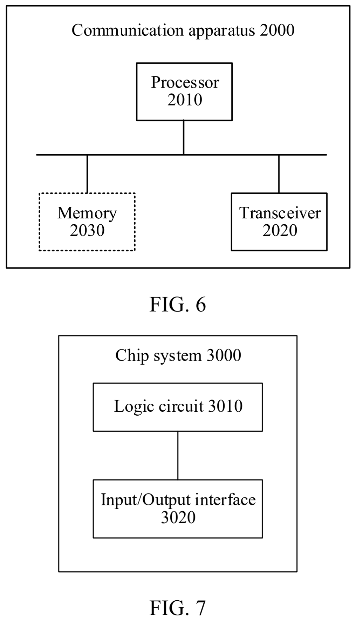

The foregoing describes in detail embodiments of a communication method side of this application with reference to FIG. 1 to FIG. 4. The following describes in detail embodiments of a communication apparatus side of this application with reference to FIG. 5 and FIG. 6. It should be understood that the descriptions of the apparatus embodiments correspond to the descriptions of the method embodiments, and therefore for a part that is not described in detail, refer to the foregoing method embodiments.

FIG. 5 is a block diagram of a communication apparatus 1000 according to an embodiment of this application. As shown in FIG. 5, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement corresponding steps or procedures performed by the terminal device in the foregoing method embodiments. The processing unit 1020 is configured to perform a processing-related operation of the terminal device in the foregoing method embodiments. The transceiver unit 1010 is configured to perform a receiving/sending-related operation of the terminal device in the foregoing method embodiments.

In another possible design, the apparatus 1000 may implement corresponding steps or procedures performed by the network device (for example, the base station) in the foregoing method embodiments. The transceiver unit 1010 is configured to perform a receiving/sending-related operation of the base station in the foregoing method embodiments, and the processing unit 1020 is configured to perform a processing-related operation of the base station in the foregoing method embodiments.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically the transmitting end in the foregoing embodiments, and may be configured to perform the procedures and/or steps corresponding to the transmitting end in the foregoing method embodiments; or the device 1000 may be specifically the receiving end in the foregoing embodiments, and may be configured to perform the procedures and/or steps corresponding to the receiving end in the foregoing method embodiments. To avoid repetition, details are not described herein again.

The device 1000 in the foregoing solutions has a function of implementing the corresponding steps performed by the transmitting end in the foregoing methods. Alternatively, the device 1000 in the foregoing solutions has a function of implementing the corresponding steps performed by the receiving end in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform a receiving/sending operation and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 5 may be the receiving end or the transmitting end in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 6 is a block diagram of a communication apparatus 2000 according to an embodiment of this application. As shown in FIG. 6, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030, the processor 2010, and the transceiver 2020 communicate with each other through the internal connection path. The memory 2030 is configured to store instructions, and the processor 2010 may execute the instructions stored in the memory 2030.

In a possible implementation, the apparatus 2000 is configured to implement the procedures and steps corresponding to the terminal device in the foregoing method embodiments.

In another possible implementation, the apparatus 2000 is configured to implement the procedures and steps corresponding to the network device (for example, the base station) in the foregoing method embodiments.

It should be understood that the device 2000 may be specifically the transmitting end or the receiving end in the foregoing embodiments, or may be a chip or a chip system. Correspondingly, the transceiver 2020 may be a transceiver circuit of the chip. This is not limited herein. Specifically, the device 2000 may be configured to perform the steps and/or procedures corresponding to the transmitting end or the receiving end in the foregoing method embodiments.

Optionally, the memory 2030 may include a read-only memory and a random access memory, and provide instructions and data to the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmitting end or the receiving end.

In an implementation process, the steps in the foregoing methods can be completed by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be completed by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

FIG. 7 is a block diagram of a chip system 3000 according to an embodiment of this application. As shown in FIG. 7, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the terminal device in the foregoing method embodiments.

For example, the logic circuit 3010 is configured to implement processing-related operations performed by the terminal device in the foregoing method embodiments, for example, processing-related operations performed by the terminal device in the embodiments shown in FIG. 2 and FIG. 3. The input/output interface 3020 is configured to implement sending and/or receiving-related operations performed by the terminal device in the foregoing method embodiments, for example, sending and/or receiving-related operations performed by the terminal device in the embodiments shown in FIG. 2 and FIG. 3.

For another example, the logic circuit 3010 is configured to implement processing-related operations performed by the network device in the foregoing method embodiments, for example, processing-related operations performed by the base station in the embodiments shown in FIG. 2 and FIG. 3. The input/output interface 3020 is configured to implement sending and/or receiving-related operations performed by the network device in the foregoing method embodiments, for example, sending and/or receiving-related operations performed by the base station in the embodiments shown in FIG. 2 and FIG. 3.

An embodiment of this application further provides a computer-readable storage medium. The computer-readable storage medium stores computer instructions for implementing the method performed by the terminal device or the base station in the foregoing method embodiments.

An embodiment of this application further provides a computer program product, including instructions. When the instructions are executed by a computer, the method performed by the terminal device or the base station in the foregoing method embodiments is implemented.

An embodiment of this application further provides a communication system. The communication system includes the terminal device and the base station in the foregoing embodiments.

For explanations and beneficial effects of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, a part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   sending channel state information CSI report configuration information to a terminal device, wherein the CSI report configuration information corresponds to M CSI resources, the CSI report configuration information comprises N pieces of sub-configuration information, each of the N pieces of sub-configuration information corresponds to the M CSI resources, each piece of sub-configuration information indicates at least one rank and at least one port sequence, each of the at least one port sequence comprises at least one antenna port, and each of the at least one rank is associated with one of the at least one port sequence, wherein M is a positive integer, and N is an integer greater than 1; and
   sending, on the M CSI resources, a reference signal.

2. The method according to claim 1, wherein the antenna port comprised in the port sequence is an antenna port that is enabled when a physical downlink shared channel is sent to the terminal device.

3. The method according to claim 1 or 2, wherein the sub-configuration information further comprises network energy saving configuration information, and the network energy saving configuration information indicates a CSI-RS antenna port used for CSI measurement.

4. The method according to any one of claims 1 to 3, wherein the sub-configuration information comprises the at least one rank and the at least one port sequence.

5. The method according to claim 3, wherein the sub-configuration information further comprises a quantity m of CSI-RS antenna ports used for CSI measurement, and the CSI-RS antenna port used for CSI measurement is $p_0$, $p_1$, $p_2$,..., $p_{m-1}$, wherein m is a positive integer, and a value of each of the at least one rank is an integer from 1 to m; and a port sequence associated with a rank whose value is v is a port sequence comprising first v antenna ports in ascending order in a port sequence {$p_0$, $p_1$, $p_2$,..., $p_{m-1}$}, wherein v is a positive integer less than or equal to m.

6. The method according to any one of claims 1 to 5, wherein the value of the rank represents a quantity of antenna ports in the port sequence associated with the rank.

7. The method according to any one of claims 1 to 6, wherein

the N pieces of sub-configuration information comprise first sub-configuration information and second sub-configuration information, and a port sequence indicated by the first sub-configuration information and a port sequence indicated by the second sub-configuration information comprise at least one same antenna port; and the method further comprises: sending first information to the terminal device, wherein the first information indicates the terminal device to measure, in a first time unit, a reference signal on the port sequence indicated by the first sub-configuration information, and measure, in a second time unit, a reference signal on the port sequence indicated by the second sub-configuration information, and the first time unit and the second time unit are different time units.

8. The method according to claim 7, wherein the time unit comprises a slot.

9. A communication method, comprising:

receiving channel state information CSI report configuration information from a base station, wherein the CSI report configuration information corresponds to M CSI resources, the CSI report configuration information comprises N pieces of sub-configuration information, each of the N pieces of sub-configuration information corresponds to the M CSI resources, each piece of sub-configuration information indicates at least one rank and at least one port sequence, each of the at least one port sequence comprises at least one antenna port, and each of the at least one rank is associated with one of the at least one port sequence, wherein M is a positive integer, and N is an integer greater than 1; and receiving, on the M CSI resources, a reference signal.

10. The method according to claim 9, wherein the sub-configuration information further comprises network energy saving configuration information, and the network energy saving configuration information indicates a CSI-RS antenna port used for CSI measurement.

11. The method according to claim 9 or 10, wherein the sub-configuration information comprises the at least one rank and the at least one port sequence.

12. The method according to claim 10, wherein the sub-configuration information further comprises a quantity m of CSI-RS antenna ports used for CSI measurement, and the CSI-RS antenna port used for CSI measurement is $p_0$, $p_1$, $p_2$,..., $p_{m-1}$, wherein m is a positive integer, and a value of each of the at least one rank is an integer from 1 to m; and a port sequence associated with a rank whose value is v is a port sequence comprising first v antenna ports in ascending order in a port sequence {$p_0$, $p_1$, $p_2$,..., $p_{m-1}$}, wherein v is a positive integer less than or equal to m.

13. The method according to any one of claims 9 to 12, wherein the value of the rank represents a quantity of antenna ports in the port sequence associated with the rank.

14. The method according to any one of claims 9 to 13, wherein

the N pieces of sub-configuration information comprise first sub-configuration information and second sub-configuration information, and a port sequence indicated by the first sub-configuration information and a port sequence indicated by the second sub-configuration information comprise at least one same antenna port; and the method further comprises: measuring, in a first time unit, a reference signal on the port sequence indicated by the first sub-configuration information, and measuring, in a second time unit, a reference signal on the port sequence indicated by the second sub-configuration information, wherein the first time unit and the second time unit are different time units.

15. The method according to claim 14, wherein the time unit comprises a slot.

16. A communication method, comprising:

sending channel state information CSI report configuration information to a terminal device, wherein the CSI report configuration information corresponds to M CSI resources, the CSI report configuration information comprises M pieces of port indication information and N pieces of sub-configuration information, the pieces of port indication information are in one-to-one correspondence with the CSI resources, each piece of sub-configuration information corresponds to the M CSI resources, the port indication information indicates at least one sequence identifier and at least one port sequence, each port sequence comprises at least one first antenna port used for channel measurement, each sequence identifier indicates one port sequence, and the sub-configuration information indicates at least one second antenna port, wherein M is an integer greater than or equal to 1, and N is an integer greater than 1; and
sending, on the M CSI resources, a reference signal by using at least one first port sequence, wherein the first port sequence belongs to the port sequence indicated by the port indication information, and an antenna port in the first port sequence is the second antenna port.

17. The method according to claim 16, wherein the second antenna port is an antenna port that is enabled when a physical downlink shared channel is sent to the terminal device.

18. The method according to claim 16 or 17, wherein the port indication information comprises:
the at least one sequence identifier and the at least one port sequence.

19. The method according to any one of claims 16 to 18, wherein the sequence identifier comprises a rank, and a value of the rank represents a quantity of antenna ports in a port sequence indicated by the rank.

20. The method according to any one of claims 16 to 19, wherein

the N pieces of sub-configuration information comprise first sub-configuration information and second sub-configuration information, and the at least one second antenna port indicated by the first sub-configuration information and the at least one second antenna port indicated by the second sub-configuration information comprise at least one same antenna port; and
the method further comprises: sending first information to the terminal device, wherein the first information indicates the terminal device to measure, in a first time unit, a reference signal of the at least one second antenna port indicated by the first sub-configuration information, and measure, in a second time unit, a reference signal of the at least one second antenna port indicated by the second sub-configuration information, and the first time unit and the second time unit are not a same time unit.

21. The method according to claim 20, wherein the time unit comprises a slot.

22. A communication method, comprising:

receiving channel state information CSI report configuration information from a base station, wherein the CSI report configuration information corresponds to M CSI resources, the CSI report configuration information comprises M pieces of port indication information and N pieces of sub-configuration information, the pieces of port indication information are in one-to-one correspondence with the CSI resources, each piece of sub-configuration information corresponds to the M CSI resources, the port indication information indicates at least one sequence identifier and at least one port sequence, each port sequence comprises at least one first antenna port used for channel measurement, each sequence identifier indicates one port sequence, and the sub-configuration information indicates at least one second antenna port, wherein M is an integer greater than or equal to 1, and N is an integer greater than 1; and
measuring, on the M CSI resources, a reference signal on at least one first port sequence, wherein the first port sequence belongs to the port sequence indicated by the port indication information, and an antenna port in the first port sequence is the second antenna port.

23. The method according to claim 22, wherein the second antenna port is an antenna port that is enabled when the base station sends a physical downlink shared channel.

24. The method according to claim 22 or 23, wherein the port indication information comprises: the at least one sequence identifier and the at least one port sequence.

25. The method according to any one of claims 22 to 24, wherein the sequence identifier comprises a rank, and a value of the rank represents a quantity of antenna ports in a port sequence indicated by the rank.

26. The method according to any one of claims 22 to 25, wherein

the N pieces of sub-configuration information comprise first sub-configuration information and second sub-configuration information, and the at least one second antenna port indicated by the first sub-configuration information and the at least one second antenna port indicated by the second sub-configuration information comprise at least one same antenna port; and
the method further comprises: measuring, in a first time unit, a reference signal of the at least one second antenna port indicated by the first sub-configuration information, and measuring, in a second time unit, a reference signal of the at least one second antenna port indicated by the second sub-configuration information, wherein the first time unit and the second time unit are different time units.

27. The method according to claim 26, wherein the time unit comprises a slot.

28. A communication apparatus, comprising a module or unit configured to perform the method according to any one of claims 1 to 8, any one of claims 9 to 15, any one of claims 16 to 21, or any one of claims 22 to 27.

29. A communication apparatus, wherein the communication apparatus comprises a processor, the processor is coupled to a memory, the memory stores instructions, and when the instructions are run by the processor, the communication apparatus is enabled to perform the method according to any one of claims 1 to 8, any one of claims 9 to 15, any one of claims 16 to 21, or any one of claims 22 to 27.

30. A communication system, comprising a terminal device and a base station terminal device, wherein the base station is configured to perform the method according to any one of claims 1 to 8, the terminal device is configured to perform the method according to any one of claims 9 to 15; or the base station is configured to perform the method according to any one of claims 16 to 21, and the terminal device is configured to perform the method according to any one of claims 22 to 27.

31. A computer-readable storage medium, wherein the computer-readable storage medium comprises a computer program, and when the computer program is run on a computer, the computer is enabled to perform the method according to any one of claims 1 to 8, any one of claims 9 to 15, any one of claims 16 to 21, or any one of claims 22 to 27.

32. A chip, comprising a processor, configured to: invoke a computer program from a memory and run the computer program, to enable a communication apparatus in which the chip is installed to perform the method according to any one of claims 1 to 8, any one of claims 9 to 15, any one of claims 16 to 21, or any one of claims 22 to 27.

33. A computer program product, wherein when the computer program product is executed by a communication apparatus, the method according to any one of claims 1 to 8, any one of claims 9 to 15, any one of claims 16 to 21, or any one of claims 22 to 27 is implemented.

FIG. 1

FIG. 2

300

```
┌─────────┐                                    ┌─────────┐
│Terminal │                                    │  Base   │
│ device  │                                    │ station │
└────┬────┘                                    └────┬────┘
     │        S310: CSI reporting                   │
     │       configuration information              │
     │◄─────────────────────────────────────────────│
     │                                              │
     │      S320: Reference signal (CSI-RS resource)│
     │◄─────────────────────────────────────────────│
 ┌───┴────────────────────────────────────┐         │
 ┊S330: Determine at least one first port  ┊         │
 ┊sequence                                 ┊         │
 └───┬────────────────────────────────────┘         │
 ┌───┴────────────────────────────────┐             │
 │S340: Measure the reference          │             │
 │signal from the base station         │             │
 └───┬────────────────────────────────┘             │
     │           S350: CSI                          │
     │─────────────────────────────────────────────►│
     │           S360: PDSCH                         │
     │◄─────────────────────────────────────────────│
     │                                              │
```

FIG. 3

CSI-RS

P-CSI-RS

CSI-RS occasion corresponding       CSI-RS occasion corresponding
to sub-configuration                    to sub-configuration
information A                            information B

FIG. 4

```
┌─────────────────────────────────┐
│      Communication               │
│      apparatus 1000              │
│   ┌─────────────────────────┐    │
│   │   Transceiver unit       │    │
│   │       1010               │    │
│   └───────────┬─────────────┘    │
│   ┌───────────┴─────────────┐    │
│   │   Processing unit        │    │
│   │       1020               │    │
│   └─────────────────────────┘    │
└─────────────────────────────────┘
```

FIG. 5

Communication apparatus 2000

Processor
2010

Memory
2030

Transceiver
2020

FIG. 6

Chip system 3000

Logic circuit 3010

Input/Output interface
3020

FIG. 7

## INTERNATIONAL SEARCH REPORT

| International application No. |
| --- |
| **PCT/CN2024/110356** |

| A. | CLASSIFICATION OF SUBJECT MATTER |
| --- | --- |

H04W 72/0457(2023.01)i; H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, CNKI, DWPI, ENTXT, 3GPP: 信道状态信息, 上报, 报告, 配置, 子配置, 测量, 资源, 集合, 索引, CSI, report, configuration, resource, set, sub, measurement, index

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023050312 A1 (QUALCOMM INC.) 06 April 2023 (2023-04-06) description, paragraphs [0028]-[0030], [0071]-[0097], and [0129], and figures 5-6 | 1-33 |
| A | CN 114503504 A (BEIJING XIAOMI MOBILE SOFTWARE CO., LTD.) 13 May 2022 (2022-05-13) entire document | 1-33 |
| A | CN 115333694 A (VIVO COMMUNICATION TECHNOLOGY CO., LTD.) 11 November 2022 (2022-11-11) entire document | 1-33 |
| A | WO 2022031077 A1 (LG ELECTRONICS INC.) 10 February 2022 (2022-02-10) entire document | 1-33 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 November 2024** | **13 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110356**

| Patent document cited in search report | | | Publication date (day/month/year) | Patent family member(s) | | | Publication date (day/month/year) |
|---|---|---|---|---|---|---|---|
| WO | 2023050312 | A1 | 06 April 2023 | EP | 4409792 | A1 | 07 August 2024 |
| | | | | CN | 118020260 | A | 10 May 2024 |
| CN | 114503504 | A | 13 May 2022 | WO | 2023133761 | A1 | 20 July 2023 |
| CN | 115333694 | A | 11 November 2022 | WO | 2022237620 | A1 | 17 November 2022 |
| | | | | EP | 4340277A1 | A1 | 20 March 2024 |
| | | | | US | 2024080148 | A1 | 07 March 2024 |
| | | | | JP | 2024517031 | W | 18 April 2024 |
| WO | 2022031077 | A1 | 10 February 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311010308X